# EUROPÄISCHE PATENTSCHRIFT

(11) **EP 1 951 919 B1**
(45) Veröffentlichungstag und Bekanntmachung des Hinweises auf die Patenterteilung: **23.06.2010**
(21) Anmeldenummer: 06805827.0
(22) Anmeldetag: 25.09.2006
(51) Int. Cl.: C22B 11/02, F27B 5/00

(54) **VERFAHREN UND VORRICHTUNG ZUR AUFBEREITUNG EDELMETALLHALTIGER MATERIALIEN**
METHOD AND DEVICE FOR COMBUSTING PRECIOUS METAL-CONTAINING MATERIALS
PROCEDE ET DISPOSITIF POUR BRULER DES MATIERES CONTENANT DES METAUX NOBLES

(30) Priorität: 27.09.2005 DE 102005046275
(43) Veröffentlichungstag der Anmeldung: 06.08.2008
(73) Patentinhaber: W.C. Heraeus GmbH, 63450 Hanau (DE)
(72) Erfinder: NOWOTTNY, Christian, 61130 Nidderau (DE); MEYER, Horst, 63674 Altenstadt (DE); GREHL, Matthias, 63773 Goldbach (DE); SCHÄFER, Dieter, 35516 Münzenberg (DE); ALT, Hans-Joachim, 63486 Bruchköbel (DE); GLAB, Wilhelm, 64859 Eppertshausen (DE)
(74) Vertreter: Kühn, Hans-Christian
(86) Internationale Anmeldenummer: PCT/EP2006/009267
(87) Internationale Veröffentlichungsnummer: WO 2007/036334

(56) Entgegenhaltungen:
- DE-A1- 3 518 725
- US-A- 3 632 336
- US-A- 4 233 496
- US-A- 4 412 889
- US-A- 5 826 520
- HOLLMANN A: "EDELMETALL-RECYCLING: VERSCHWELUNG STATT VERBRENNUNG" WLB. WASSER LUFT UND BODEN, VEREINIGTE FACHVERLAGE, MAINZ, DE, Bd. 3, 2000, Seiten 45-47, XP009071079 ISSN: 0938-8303

## Beschreibung

Die Erfindung betrifft Verfahren zum und entsprechende Vorrichtungen für den Abbrand von edelmetallhaltigen Materialien.

Zur Aufarbeitung edelmetallhaltiger Abfälle mit relativ hohen organischen Anteilen, wie z.B. Katalysatorrückständen, Leiterplatten und sonstigem Elektronikschrott, sind industriell folgende Verfahren gebräuchlich:
1. (Ecolyst ^{®} -Verfahren, Fa, Umicore, DE 32 23 501 C1/C2). Es handelt sich um ein Verfahren zur Ausfällung von vornehmlich Rh aus flüssigen organischen Rückständen mit Hilfe von Tellur. Nach der Abtrennung des Edelmetalls verbleibt eine organische Mischung, die einer Entsorgung (z.B. Verbrennung) zugeführt werden muss. Das Verfahren setzt kontinuierlich transportables Material voraus.
2. Aquacat^{®}-Verfahren (Johnson Matthey). Damit können Kohlenstoff und organische Verbindungen enthaltende edelmetallhaltige Abfälle, besonders Gold-, Silber-, Platin- und Palladiumabfälle aus der Industrie und dem Uhren- und Schmucksektor aufgearbeitet werden. Die organischen Bestandteile werden in überkritischem Wasser unter Druck mit Sauerstoff oxidiert, zurück bleibt das Edelmetall als oxidischer Rückstand. Auch hier muss das Material kontinuierlich transportabel sein. Das Verfahren setzt ferner einen Druckreaktor voraus.

Angestrebt wird ein verbessertes Verfahren mit folgenden vorteilhaften Merkmalen:
- Batchweise oder kontinuierliche Verarbeitung mit der Möglichkeit des Dauebetriebs,
- effiziente Steuerung des Wärmehaushalts,
- hohe Wertstoffausbeute.

Die direkte Verbrennung (Abbrand) der organischen Anteile von edelmetallhaltigen Rückständen wird bereits in verschiedenen Verfahren genutzt¹. Wenn die zu behandelnden Rückstände sehr leicht und mit großer Energie brennende organische Anteile enthalten, kann es allerdings zu einer sehr intensiven Flammenbildung kommen. ¹ Verfahren zur Verbrennung von edelmetallhaltigen Schlämmen und Multielement Abfall mit anschließender Auslaugung der Asche werden z.B. in DE 31 34 733 C2 und WO9937823 beschrieben.

Zur Behandlung von Haushaltsabfall wurde von Siemens KWU ein Verfahren entwickelt, bei dem Pyrolyse und Hochtemperaturverbrennung unter Nutzung der Pyrolysegase kombiniert sind (Ullmann's 6th ed., CD-ROM-Release 2003, "Waste" Ref. 320: K. J. Thomé-Kozmiensky: Thermische Abfallbehandlung, EF-Verlag für Energie- und Umwelttechnik, Berlin 1994). Dort kommt es allerdings entscheidend auf die Energiegewinnung bei der Verbrennung an (Müllkraftwerk). Ein weiteres mögliches Verfahren ist die Vergasung der organischen Anteile von metallhaltigem Müll², das aber wiederum mit hohem apparativem Aufwand zu führen ist und stets nennenswerte vergasbare Anteile voraussetzt, weil das Gas letztlich der Energiegewinnung dienen soll.
² DE 33 29 042 A1 betrifft ein Verfahren zur Rückgewinnung von Bunt- und Edelmetallen aus kunststoffhaldgen Materialien, besonders aus Verkokungsprodukten, bei dem der Kohlenstoff mit einem getrennt erzeugten Vergasungmittel wie H₂O/CO₂/O₂) isotherm vergast wird, wobei die Temperatur über die Partialdrücke geregelt wird.

DE 94 20 410 U1 betrifft eine Anlage für ein thermisches Recyclingverfahren für metallische Gegenstände, die mit organischen Stoffen vermischt oder verunreinigt sind, wie z.B. Ölfässer, aber auch in kleinerem Maßstab edelmetallhaltiger Kehricht aus Schmuckwerkstätten oder Kleinbetrieben der Schmuckindustrie. Dabei wird eine Verschwelung mit Pyrolysephase und eine Oxidationsphase in einer Schwelkammer empfohlen, wobei die Oxidation unter Einführung eines Abgases mit verbrennungsfähigem Sauerstoffgehalt stattfindet. Eine ähnliche Anlage dient gemäß DE 35 18 725 A1 der thermischen Entlackung - dort mit Verbrennung der Schwelgase.

Dem Artikel A. Hollman "Edelmetall-Recycling; Verschwelung statt Verbrennung" WLB. Wasser, Luft und Boden, Vereinigte Fachverlage, Mainz, DE, Bd. 3, 2000, Seite 45-47 ist ein Ofen zum Aufbereiten von edelmetallhaltigen Abfällen, wie etwa Gekrätz aus der Schmuckindustrie, zu entnehmen. Dieser Ofen weist eine Reaktionskammer auf, welche ein sequentielles Verschwelen und Verbrennen der Abfälle ermöglicht.

Die beiden Verfahren sind für Flüssigkeiten mit organischen Anteilen, die mit großer Energie verbrennen, nicht geeignet.

Überraschenderweise kann man mit einer einfachen Verfahrensführung sowohl hohen Anlagenaufwand vermeiden, als auch die oben beschriebenen verbessernden Merkmale realisieren:
Erfindungsgemäße Ausführungen sind in den unabhängigen Ansprüchen beschrieben. Die abhängigen Ansprüche beschreiben bevorzugte Ausführungen.

Die Erfindung betrifft den Abbrand von edelmetallhaltigen Materialien mit organischen Anteilen, die mit großer Energie verbrennen, in mindestens zwei Schritten, von denen der erste (A) eine Pyrolyse oder Verschwelung bei reduzierter Sauerstoffzufuhr beinhaltet und mindestens ein weiterer Schritt (B) eine oxidative Verbrennung umfasst. Während des ersten Verfahrensschrittes entsteht keine heiße Flamme, Bei der nachfolgenden, oxidativen Verbrennung des Pyrolyserückstandes sind Flamme und Rußaustrag begrenzt. Vorzugsweise ist ein Rußaustrag ausgeschlossen. Dabei werden die Schritte A und B nacheinander in einer indirekt beheizten Ofenkammer durchgeführt, wobei weder die Charge gewechselt, noch der Ofen geöffnet wird, wobei in Schritt A im Ofenraum durch Inertisieren mit Schutzgas eine maximal 6 % Sauerstoff enthaltende sauerstoffarme Atmosphäre in der Abbrandkammer eingestellt wird und das Ende der Pyrolyse kontrolliert wird und dass nach der Feststellung des Endes der Verschwelung oder Pyrolyse des Recyclinggutes der Schritt B durch Luftzufuhr oder Sauerstoffzufuhr direkt im Anschluss an die Pyrolyse oder Verschwelung erfolgt.

Erfindungsgemäß ist vorgesehen, dass das Verfahren im Chargenbetrieb in zwei Kammern durchgeführt wird, wobei in der ersten Kammer Schritt A durchgeführt wird, während die zweite mit einer zweiten Charge Material beschickt wird, dann in der ersten Kammer Schritt B durchgeführt wird, während in der zweiten für die zweite Charge Schritt A erfolgt, und während in der zweiten Kammer auf Verbrennung (Schritt B) umgeschaltet wird, die erste wieder mit Material für die Pyrolyse (Schritt A) beschickt wird, und die zwei Kammern im Wechselbetrieb mit einer einzigen thermischen Nachverbrennung betrieben werden.

Die edelmetallhaltigen Materialien mit organischen Anteilen sind insbesondere Kohlen, Lösemittel oder Kunststoffe. Derartige Materialien weisen im Allgemeinen einen Heizwert von 20 bis 50 KJ/g, insbesondere 40 KJ/g auf und sind gegebenenfalls explosionsgefährdet. Erfindungsgemäß werden die Schritte A und B in einem indirekt beheizten Ofen direkt nacheinander in einer Ofenkammer ausgeführt. Dabei erfolgt die Pyrolyse, die im deutschen auch als Verschwelung bezeichnet wird, in einer Atmosphäre mit reduziertem Sauerstoffgehalt. Hierzu wird die Kammer mit Schutzgas, insbesondere Stickstoff oder Argon gespült. Der Sauerstoffgehalt beträgt maximal 6 Gew.%, insbesondere maximal 4 Gew.%. Das Ende der Pyrolyse wird durch einen Sensor, insbesondere einen Drucksensor, festgestellt. Das pyrolytisch behandelte Material weist am Ende des Verfahrensschrittes A schwerflüchtige Substanzen mit hohem Kohlenstoffgehalt auf. Nach dem mittels Sensor festgestellten Ende der Pyrolyse wird die Atmosphäre durch Luft oder Sauerstoffzufuhr geändert und damit direkt Schritt B eingeleitet. Überraschenderweise kann somit Sauerstoff in den auf bereits 400 bis 900 °C, insbesondere 500 bis 800 °C aufgeheizten Ofen eingeführt werden, ohne dass eine Explosion erfolgt. Dieser Verfahrensschritt erspart erheblichen logistischen Aufwand, erheblichen Energieeinsatz und verkürzt den Zeitaufwand.

Der Energieaufwand wird gesenkt indem zwei Öfen nebeneinander alternierend die Schritte A und B ausführen und mit einer einzigen Abgasbehandlung ausgestattet sind. Somit gelangen gleichzeitig Pyrolyseabgase und Verbrennungsabgase in die Abgasbehandlungsanlage. Dies reduziert den Volumenstrom und damit den Energiebedarf.

Für einen erfindungsgemäßen Recyclingofen ist es erheblich, dass die Abbrandkammer des Ofens mit einem Sensor ausgestattet ist, um das Pyrolyseende ermitteln zu können. Weiterhin erheblich ist, dass der Pyrolyseofen unter Schutzgas als auch unter Luftzufuhr oder Sauerstoffatmosphäre betrieben werden kann und eine Umschalteinrichtung vorhanden ist, die von der Schutzgasbefüllung der Ofenkammer auf einen Luftfluss bzw. Sauerstofffluss umstellen kann. Dabei muss die Umstellung vom Ergebnis des Sensors abhängig gesteuert werden.

Verfahrensseitig maßgeblich ist, dass die Schritte A und B nacheinander in einer Kammer durchgeführt werden, das Ende der Pyrolyse bestimmt wird und nach dem Ende der Pyrolyse ein Atmosphärenwechsel von schutzgashaltiger Atmosphäre zu Luft oder Sauerstoffatmosphäre erfolgt. Dies erspart Chargenwechsel und den damit verbundenen Aufwand an Zeit und Energie.

In einer bevorzugten Ausführung weist der Ofen eine kontinuierliche Fördereinrichtung für Flüssigkeiten oder Pasten auf. Hierzu werden Flüssigkeiten oder Pasten dem 300 °C bis 700 °C, insbesondere 350 °C bis 600 °C heißen Ofen während der Pyrolyse kontinuierlich in die Pyrolysekammer gefördert. Die Explosionsgefahr wird dabei vermieden, in dem der Ofen unter leichtem Überdruck betrieben wird.

Pasten werden soweit erwärmt, dass sie sich wie Flüssigkeiten verhalten. Durch die Förderung flüssiger Stoffe oder verflüssigter Pasten durch eine Rohrleitung wird der Sauerstoffeintrag so gering gehalten, dass Explosionsgrenzen nicht erreicht werden können.

Der Edelmetallanteil der Abfälle kann je nach Herkunft in weiten Grenzen variieren, z.B. von 0,01 bis 60%. Neben den Edelmetallen können weitere Metalle enthalten sein. Für Abfälle mit einem Edelmetallanteil zwischen 10 und 1.000 ppm (0,001 und 0,1 Gew.%), insbesondere zwischen 10 und 100 ppm (0,001 und 0,01 Gew.%) ist eine Anreicherung mit der kontinuierlichen Fördereinrichtung in die Pyrolyse besonders geeignet, da durch die kontinuierliche Förderung bereits während der Pyrolyse eine erhebliche Anreicherung innerhalb einer Wanne erzielt werden kann. Durch die kontinuierliche Förderung ist es möglich, innerhalb einer Wanne, bezogen auf das Wannenvolumen, ein Vielfaches an Flüssigkeitsvolumen zu pyrolisieren,

Der erfindungsgemäße Ofen ist besonders wichtig, um Rhodium, Platin, Palladium, Gold und Iridium zu recyclen.

Die Förderung der Flüssigkeiten während der Pyrolyse verteilt die Schwelgaserzeugung gleichmäßig über die Pyrolyseprozessdauer. Das während der Pyrolyse erzeugte Schwelgas reduziert den Erdgasverbrauch der thermischen Nachverbrennung. Die thermische Nachverbrennung ist deshalb einerseits auf geringere Volumenströme auslegbar und benötigt andererseits aufgrund der stetigen Schwelgaszuführung einen geringeren Energieverbrauch.

Bei dem erfindungsgemäßen Verfahren werden vorzugsweise folgende Maßnahmen ergriffen, die einzeln oder in Kombination miteinander angewandt werden können.
- **A**: Das Verfahren wird vorteilhaft in einem Kammerofen durchgeführt.
- **B**: Es sind zwei Kammern für den Chargenbetrieb vorhanden: In der einen wird die Pyrolyse durchgeführt und dann die Verbrennung, während in der zweiten bereits die nächste Pyrolyse erfolgt. Während dann in der zweiten Kammer auf Verbrennung umgeschaltet wird, wird die erste bereits wieder mit Material für die Pyrolyse beschickt.
- **C**: Sehr vorteilhaft kann es sich auswirken, wenn die Materialzufuhr für den Pyrolyseschritt langsam und kontinuierlich erfolgt. Einzelne Siedeverzüge (Verpuffungen), die bei einer portionsweisen Zugabe auftreten können, werden so vermieden. Die Energieabgabe verläuft gleich-mäßiger.
- **D**: Der Pyrolyseschritt findet naturgemäß unter weitgehendem Sauerstoffauschluss statt.
Zweckmäßig wird die betreffende Kammer vor dem Pyrolysieren mit Schutzgas, bevorzugt Stickstoff gespült.
- **E**: Die Temperaturführung bewegt sich in der Regel im Rahmen von 100 bis 1.200, insbesondere 200 bis 800°C, bei Schritt A 100 bis 1.200, vorzugsweise von 200 bis 800 °C, bei Schritt B von 500 bis 1.200, vorzugsweise 600 bis 800 °C.
- **F**: Die Materialzufuhr von Flüssigkeiten für den Pyrolyseschritt A erfolgt bevorzugt nicht portionsweise, sondern langsam und kontinuierlich.
- **G**: Bei Schritt B werden Edelmetallanteile und Asche zweckmäßig in Auffangwannen aufgenommen, die unterhalb der Brenngutzuführung bzw. Pyrolysegutzuführung angeordnet sind.

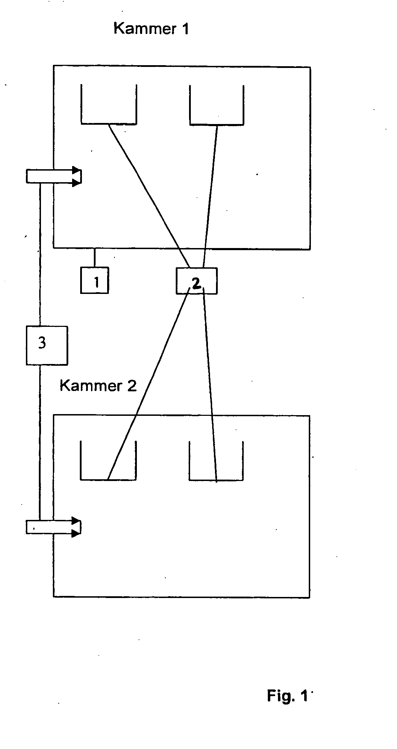

Das Verfahren wird anhand einer Zeichnung und eines Ausführungsbeispiels verdeutlicht
Figur 1 ist eine Schemazeichnung der zwei Kammern.

Eine zweckmäßige Ausführungsform ist dem Schema der Figur 1 zu entnehmen, worin bedeuten:
1. Die beiden Brennkammern mit Heizeinrichtung.
2. Auffangwannen, die unter der Brenngutzuführung bzw. Pyrolysegutzuführung angeordnet sind, zur Aufnahme von Edelmetallanteilen und Asche.
3. Brenngutzuführung bzw. Pyrolysegutzuführung.

Die Erfindung betrifft somit auch eine Vorrichtung zur Durchführung des erfindungsgemäßen Verfahrens aufweisend zwei beheizbare Brennkammern 1, je mindestens einer Brenngutzuführung 3 und je mindestens einer Auffangwanne 2, angeordnet unterhalb der Brenngutzuführung.

### Ausführungsbeispiel:

1. 500 kg unterschiedliche Abfälle enthaltend: Edelmetallanteil von 1 bis 20 Gew.% variierend, davon Elemente Rh zu 0,001 bis 50, insbesondere 0.1 bis 20 Gew.%, Pd zu 0,01 bis 50, insbesondere 0,1 bis 20 Gew.% sowie organische Anteile/Lösungsmittel 50 bis 99,99, insbesondere 80 bis 99 Gew-%, werden in einem Kammerofen bei einem Sauerstoffgehalt von < 4% und einer Temperatur von 200 bis 800°C 8 bis 15 Stunden lang behandelt.
   Danach wird der Rückstand unter Luftzufuhr bei einem Sauerstoffgehalt von 14 bis 16 % und bei einer Temperatur von 600 bis 800° abgebrannt.
2. Ein Kammerofen wird mit ungefähr 1,100 kg unterschiedlichem, edelmetallhaltigem Abfall bestückt. Hierzu werden 32 Wannen mit einem Füllvolumen von je 60 l in den Ofen eingeführt. 14 der Wannen werden mit je 30 kg einer 0,1 Gew.% Palladium aufweisenden Kohle befüllt, 5 Wannen werden mit je 20 kg Platinoxid gefüllt, wobei das Platinoxid zu 80 Gew.% vorliegt und mit 20 Gew.% eines Lösungsmittels auf Xylol-Basis verunreinigt ist. 5 Wannen werden mit je 20 kg einer Paste aus der Produktion der keramischen Farben befüllt, wobei die Paste ungefähr 10 Gew.% Gold aufweist. In die oberste Lage des Ofens werden 8 leere Wannen eingestellt. Die Wannen werden in einem Chargengestell gehalten. Hierauf wird der Ofen in den Pyrolysebetrieb geschaltet. Dazu wird Schutzgas in den Ofen eingeführt, bis der Sauerstoffgehalt unter 4 % gefallen ist. Hierauf wird der bei 200 °C beladene Ofen innerhalb von 4 Stunden auf 600 °C erhitzt. Der Ofen wird dann zwei Stunden lang bei 600 °C gehalten.

Zu diesem Zeitpunkt ist die Pyrolyse in den beladenen Wannen weitgehend abgeschlossen. Hierauf erfolgt eine Zudosierung von 500 l organischer Flüssigkeit eines homogen Katalysators auf Basis von Rhodium in Triphenylphosphin mit Zusätzen von Methylisobuthylketon. Der Gehalt an Rhodium beträgt 10 ppm (0,001 Gew.%). Die Lösung wird kontinuierlich in die 8 Wannen gepumpt und zwar weitgehend gleichmäßig verteilt. Die Pumpleistung beträgt maximal 200 I/Stunde und wird über die Auslastung der thermischen Nachverbrennung reguliert. Hierzu ist die thermische Nachverbrennung mit einem Temperatursensor ausgestattet, der bei einem Anstieg der Temperatur über 1.100 °C die Pumpleistung reduziert. Damit ist das Ende der Pyrolyse frühestens nach 2 1/2 Stunden erreicht, bei höheren Brennwerten entsprechend der Regulierung durch die thermische Nachverbrennung entsprechend später. Nach dem Ende des Pumpens wird die Temperatur des Ofens innerhalb von ungefähr 30 Minuten auf 800 °C erhöht.

Dabei erhöht sich der durch das Schutzgas eingestellte Überdruck von 5 mbar kurzzeitig durch fortschreitende Pyrolyse. Nachdem der mit einem Drucksensor festgestellte Überdruck auf den Überdruck der Stickstoffspülung zurückgefallen ist, wird dieser Zustand 20 Minuten bei 800 °C gehalten. Findet in dieser Überprüfungszeit kein weiterer Druckanstieg statt, wird atmosphärische Luft der Ofenkammer zugeführt und die Oxidationsphase damit ohne Abkühlung der Kammer gestartet. Ein zweiter Ofen, der an die gleiche thermische Nachverbrennung angeschlossen ist, wie der inzwischen in die Verbrennungsphase überführte Ofen, wird für den Start einer Pyrolyse freigegeben. Die thermische Nachverbrennung ist auf 1.100 °C eingestellt und wird durch das Ineinanderschalten effizienter genutzt. Das Ineinanderschalten bewirkt eine Glättung der freiwerdenden Schwelgasmengen über die Prozesse A und B. Die thermische Nachverbrennung ist dem Wesen nach für einen Ofen ausgelegt und wird tatsächlich mit zwei Öfen betrieben. Dies erspart zum einen Aufwand bezüglich der Dimensionierung und insbesondere die Energiekosten um die Temperatur bei 1.100 °C zu halten. Weiterhin wird der Erdgasverbrauch der thermischen Nachverbrennung durch die Einleitung der Schwelgase reduziert. Dies geschieht umso effizienter, je homogener der Schwelgaseintrag erfolgt, was erfindungsgemäß durch das Koppeln der Nachverbrennung eines Ofens der sich in Prozess B befindet mit einem Ofen der in Prozess A gefahren wird.

Beim Umschalten der Pyrolyse auf Verbrennung wird erfindungsgemäß eine Abkühlung des Ofens eingespart und damit zum einen Zeit gewonnen und zum anderen Energie, um diesen wieder aufzuheizen. Weiterhin wird der Erdgasverbrauch für die Nachverbrennung für die schwelgasfreie Zeit des Abkühlens eingespart.

Die Oxidation wird in bekannter Weise zu Ende geführt, worauf der Ofen auf 200 °C abgekühlt wird und Charge entnommen wird.

Dem erfindungsgemäßen Verfahren lassen sich verschiedene Chargen ohne Durchmischung untereinander bereiten. Beispielsweise können Chargen verschiedener Kunden parallel aufgearbeitet werden, wobei die Chargen unterschiedlicher Natur sein können.

Die Zuführung der Flüssigkeiten bringt ebenfalls den Vorteil mit sich, dass die Schwelgasmenge vergleichmäßigt wird, um bei der thermischen Nachverbrennung Kosten einzusparen. Die bei 600 °C zugeführten Flüssigkeiten können auch verflüssigte Pasten oder Suspensionen sein. Diese Flüssigkeiten sind insbesondere bei diesen hohen Temperaturen in Anwesenheit von Sauerstoff explosionsgefährlich. Die Explosionsgefahr wird erfindungsgemäß dadurch ausgeschlossen, in dem der Sauerstoffgehalt auf unter 6 % gehalten wird. Damit werden überraschenderweise explosionsgefährliche Stoffe bei hohen Temperaturen einem Ofen zugeführt.

## Patentansprüche

1. Recyclingofen zum Aufbereiten explosionsgefährdeter edelmetallhaltiger Materialien mit organischen Anteilen, die mit großer Energie verbrennen,
mit einer Umschalteinrichtung zum Wechselbetrieb einer Abbrandkammer des Ofens zwischen
A Pyrolyse oder Verschwelung unter Schutzgas in einer maximal 6 Gewichts-% Sauerstoff aufweisenden Atmosphäre,
B oxidative Verbrennung der organischen Anteile einschließlich Kohlenstoff,
wobei der Ofen eine indirekte Beheizung aufweist und eine Steuerung, die über einen Sensor das Ende der Pyrolyse oder Verschwelung bestimmen kann und eine Umschalteinrichtung so steuert, dass dem Ofenraum nach Ende der Pyrolyse oder Verschwelung Luft oder Sauerstoff zugeführt wird,
**gekennzeichnet dadurch, dass**
der Recyclingofen wenigstens zwei Brennkammern aufweist, die an eine einzige, gemeinsame thermische Nachverbrennung angeschlossen sind, und
die zwei Brennkammern im Wechselbetrieb mit der einzigen thermischen Nachverbrennung betreibbar sind.

2. Recyclingofen nach Anspruch 1, **dadurch gekennzeichnet, dass** der Sensor ein Drucksensor oder ein stoffsensitiver Sensor ist.

3. Recyclingofen nach einem der Ansprüche 1 oder 2, **dadurch gekennzeichnet, dass** die Ofenkammer einerseits als Schwel- bzw. Pyrolysekammer und andererseits als Abbrandkammer nutzbar ist und eine explosionssichere Flüssigkeitszuführeinrichtung zu einer mindestens 400 °C heißen Kammer aufweist.

4. Verfahren zum Aufbereiten explosionsgefährdeter edelmetallhaltiger Materialien mit organischen Anteilen, die mit großer Energie verbrennen, mit den Schritten
A Pyrolyse oder Verschwelung bei mindestens reduzierter Sauerstoffzufuhr
B oxidative Verbrennung der organischen Anteile,
wobei die Schritte A und B nacheinander in einer indirekt beheizten Ofenkammer durchgeführt werden, wobei weder die Charge gewechselt, noch der Ofen geöffnet wird, wobei in Schritt A im Ofenraum durch Inertisieren mit Schutzgas eine maximal 6 % Sauerstoff enthaltende sauerstoffarme Atmosphäre in der Abbrandkammer eingestellt wird und das Ende der Pyrolyse kontrolliert wird und dass nach der Feststellung des Endes der Verschwelung oder Pyrolyse des Recyclinggutes der Schritt B durch Luftzufuhr oder Sauerstoffzufuhr direkt im Anschluss an die Pyrolyse oder Verschwelung erfolgt,
**dadurch gekennzeichnet, dass**
das Verfahren im Chargenbetrieb in zwei Kammern durchgeführt wird,
wobei in der ersten Kammer Schritt A durchgeführt wird, während die zweite mit einer zweiten Charge Material beschickt wird,
dann in der ersten Kammer Schritt B durchgeführt wird, während in der zweiten für die zweite Charge Schritt A erfolgt, und
während in der zweiten Kammer auf Verbrennung (Schritt B) umgeschaltet wird, die erste wieder mit Material für die Pyrolyse (Schritt A) beschickt wird, und
die zwei Kammern im Wechselbetrieb mit einer einzigen thermischen Nachverbrennung betrieben werden.

5. Verfahren nach Anspruch 4, wobei die Edelmetall Anteile zu mindestens 0,001 Gew.% vorhanden sind.

6. Verfahren nach einem der vorstehenden Ansprüche, wobei die Materialzufuhr für den Pyrolyseschritt A nicht portionsweise, sondern langsam und kontinuierlich erfolgt.

7. Verfahren nach einem der vorstehenden Ansprüche, wobei bei Schritt A und B Edelmetallanteile und Asche in Auffangwannen aufgenommen werden, die unter der Brenngutzuführung oder Pyrolysegutzuführung angeordnet sind.

8. Verfahren nach einem der vorstehenden Ansprüche, wobei die Temperatur bei Schritt A von 200 bis 800°C beträgt.

9. Verfahren nach einem der vorstehenden Ansprüche, wobei die Temperatur bei Schritt B von 600 bis 1.200°C beträgt.

10. Verfahren zum Aufbereiten explosionsgefährdeter edelmetallhaltiger Materialien mit organischen Anteilen, die mit großer Energie verbrennen, mit den Schritten
A Pyrolyse oder Verschwelung bei mindestens reduzierter Sauerstoffzufuhr und
B oxidative Verbrennung der organischen Anteile,
nach einem der vorhergehenden Ansprüche, **dadurch gekennzeichnet, dass** eine Zudosierung flüssiger oder verflüssigter Stoffe während der Pyrolyse anhand wenigstens eines Parameters der Nachverbrennung, Insbesondere eines Temperatursensors gesteuert wird.

## Claims

1. Recycling furnace for the recycling of explosion-hazardous precious metal-containing materials with organic fractions that combust with great energy,
having a switching facility for alternating operation of the combustion chamber of the furnace between
A pyrolysis or carbonization under protective gas in an atmosphere containing maximally 6 % oxygen by weight,
B oxidative combustion of the organic fractions including carbon,
whereby the furnace comprises an indirect heating and a control that can determine the end of the pyrolysis or carbonization by means of a sensor and controls a switching facility such that air or oxygen is supplied to the furnace space after the end of the pyrolysis or carbonization,
**characterized in that**
the recycling furnace comprises at least two combustion chambers that are attached to a single joint thermal after-combustion, and
the two combustion chambers can be operated in alternating operation with a single thermal after-combustion.

2. Recycling furnace according to claim 1, **characterized in that** the sensor is a pressure sensor or a substance-sensitive sensor.

3. Recycling furnace according to any one of the claims 1 or 2, **characterized in that** the furnace chamber can be used, on the one hand, as carbonization and/or pyrolysis chamber and, on the other hand, as combustion chamber, and comprises an explosion-safe facility for supplying liquid to a chamber that is at least at 400 °C.

4. Method for the recycling of explosion-hazardous precious metal-containing materials with organic fractions that combust with great energy, comprising the steps
A pyrolysis or carbonization at at least reduced oxygen supply
B oxidative combustion of the organic fractions,
whereby the steps A and B are carried out consecutively in an indirectly heated furnace chamber, and whereby neither is the batch changed, nor is the furnace opened, whereby, in step A, an oxygen-depleted atmosphere containing maximally 6 % oxygen is established in the furnace space by inertization with protective gas, and the end of pyrolysis is controlled, and in that, once the end of the carbonization or pyrolysis of the recycling goods is determined, step B is carried out directly after the pyrolysis or the carbonization by supplying air or oxygen,
**characterized in that**
the method is carried out by batch operation in two chambers,
whereby step A is carried out in the first chamber, while the second chamber is charged with a second batch of the material,
step B is then carried out in the first chamber, while step A is carried out for the second batch in the second chamber, and
the first chamber is charged with material for the pyrolysis (step A), while the second chamber is switched to combustion (step B), and
the two chambers are operated in alternating operation with a single thermal after-combustion.

5. Method according to claim 4, whereby the precious metals are present in fractions of at least 0.001 % by weight.

6. Method according to any one of the preceding claims, whereby the supply of material for pyrolysis step A is not carried out in batches, but slowly and continuously.

7. Method according to any one of the preceding claims, whereby, in steps A and B, precious metal fractions and ash are taken up in collecting vats that are arranged below the combustion material supply or pyrolysis material supply.

8. Method according to any one of the preceding claims, whereby the temperature in step A is from 200 to 800°C.

9. Method according to any one of the preceding claims, whereby the temperature in step B is from 600 to 1,200°C.

10. Method for the recycling of explosion-hazardous precious metal-containing materials with organic fractions that combust with great energy, comprising the steps
A pyrolysis or carbonization at at least reduced oxygen supply, and
B oxidative combustion of the organic fractions,
according to any one of the preceding claims, **characterized in that** addition of doses of liquid or liquefied substances during the pyrolysis is controlled by means of at least one parameter of the after-combustion, in particular by means of a temperature sensor.

## Revendications

1. Four de recyclage pour le traitement de matériaux contenant des métaux nobles et menacés par des risques d'explosion comportant des parts organiques, qui brûlent avec une énergie importante,
comprenant un système d'inversion pour le fonctionnement alternant d'une chambre de combustion du four entre
A pyrolyse ou combustion lente sous gaz protecteur dans une atmosphère qui présente au maximum 6 % en poids d'oxygène,
B combustion oxydante des parts organiques y compris du carbone,
dans lequel le four comporte un chauffage indirect et une commande qui est capable de déterminer au moyen d'un capteur la fin de la pyrolyse ou de la combustion lente et qui commande un système d'inversion de telle façon qu'après la fin de la pyrolyse ou de la combustion lente, de l'air ou de l'oxygène est admis dans la chambre du four,
**caractérisé en ce que**
le four de recyclage comprend au moins deux chambres de combustion qui sont raccordées à un système de postcombustion thermique unique commun, et
les deux chambres de combustion sont susceptibles de fonctionner en service alternant avec le système de postcombustion thermique unique.

2. Four de recyclage selon la revendication 1, **caractérisé en ce que** le capteur est un capteur de pression ou un capteur sensible aux produits.

3. Four de recyclage selon l'une des revendications 1 et 2, **caractérisé en ce que** la chambre du four est utilisable d'une part à titre de chambre de combustion lente ou de pyrolyse et d'autre part à titre de chambre de combustion, et comprend un système d'admission de liquide protégé vis-à-vis des explosions menant à une chambre présentant une température d'au moins 400°C.

4. Procédé pour le traitement de matériaux contenant des métaux nobles et menacés par des risques d'explosion, comportant des parts organiques, qui brûlent avec une grande énergie, comprenant les étapes suivantes
A pyrolyse ou combustion lente avec admission d'oxygène au moins réduite
B combustion oxydante des parts organiques,
dans lequel les étapes A et B sont exécutées l'une après l'autre dans une chambre du four à chauffage indirect, sans que la charge soit changée ni que le four soit ouvert, dans lequel dans l'étape A on établit dans la chambre du four par inertisation avec un gaz protecteur une atmosphère pauvre en oxygène contenant au maximum 6 % d'oxygène et on contrôle la fin de la pyrolyse, et après constatation de la fin de la combustion lente ou de la pyrolyse des produits recyclés, on procède à l'étape B par amenée d'air ou amenée d'oxygène directement à la suite de la pyrolyse ou de la combustion lente,
**caractérisé en ce que**
le procédé est mené dans deux chambres dans un fonctionnement par charges,
dans lequel on exécute l'étape A dans la première chambre tandis que la seconde est chargée avec une seconde charge de matériau,
on exécute ensuite l'étape B dans la première chambre, tandis que l'étape A est exécutée dans la seconde chambre pour la seconde charge, et
alors que l'on inverse la seconde chambre vers la combustion (étape B, la première chambre est à nouveau chargée avec du matériau pour la pyrolyse (étape A), et
les deux chambres sont amenées à fonctionner en service alternant avec un système de postcombustion thermique unique.

5. Procédé selon la revendication 4, dans lequel les parts de métal noble sont présentes à raison d'au moins 0,001 % en poids.

6. Procédé selon l'une des revendications précédentes, dans lequel l'amenée de matériau pour l'étape de pyrolyse A n'a pas lieu par portions mais lentement et en continu.

7. Procédé selon l'une des revendications précédentes, dans lequel lors des étapes A et B, les parts de métal noble et les cendres sont reçues dans des cuves de collecte qui sont agencées au-dessous de l'amenée des produits à la combustion ou de l'amenée des produits à la pyrolyse.

8. Procédé selon l'une des revendications précédentes, dans lequel la température à l'étape A est de 200 à 800°C.

9. Procédé selon l'une des revendications précédentes, dans lequel la température à l'étape B est de 600 à 1200°C.

10. Procédé pour le traitement de matériaux contenant des métaux nobles et menacés par des risques d'explosion, comportant des parts organiques qui brûlent avec une grande énergie, comprenant les étapes suivantes
A pyrolyse ou combustion lente avec amenée d'oxygène au moins réduite et
B combustion oxydante des parts organiques
selon l'une au moins des revendications précédentes,
**caractérisé par** une amenée dosée de produits liquides ou liquéfiés pendant la pyrolyse, commandée à l'aide d'au moins un paramètre de la postcombustion, en particulier d'un détecteur de température.
